Europäisches Patentamt

**European Patent Office**

(19)

Office européen des brevets

(11) Publication number: **0 023 069**

**B1**

(12) **EUROPEAN PATENT SPECIFICATION**

(45) Date of publication of patent specification: **21.03.84**

(51) Int. Cl.³: **A 47 J 31/56**

(21) Application number: **80200704.7**

(22) Date of filing: **18.07.80**

(54) **Apparatus for preparing hot drinks.**

(30) Priority: **20.07.79 NL 7905650**

(43) Date of publication of application:
**28.01.81 Bulletin 81/4**

(45) Publication of the grant of the patent:
**21.03.84 Bulletin 84/12**

(84) Designated Contracting States:
**AT BE CH DE FR GB IT LI LU NL SE**

(56) References cited:
**CH - A - 386 071**
**GB - A - 663 267**
**GB - A - 1 072 105**
**NL - A - 6 804 851**
**US - A - 2 630 061**
**US - A - 3 915 341**

(73) Proprietor: **APPARATENFABRIEK ANIMO B.V.**
**Amsterdamseweg 22**
**NL-3800 AP Amersfoort (NL)**

(72) Inventor: **Scheepstra, Lipke**
**Amsterdamseweg 22**
**NL-3800 AP Amersfoort (NL)**

(74) Representative: **Kooy, Leendert Willem et al,**
**OCTROOIBUREAU VRIESENDORP & GAADE P.O.**
**Box 266**
**NL-2501 AW The Hague (NL)**

Courier Press, Leamington Spa, England.

## Apparatus for preparing hot drinks

The invention relates to an apparatus for preparing hot drinks comprising:

— an open boiler having a cold water supply pipe and a dispensing pipe with a vertically arranged portion;
— a heating element in the boiler with a switching means switching the energy supply to the heating element;
— a device for receiving hot water from the dis-. pensing pipe and preparing said hot drinks;
— a cold water supply system containing a pipe and an open water tank whose bottom is connected by an outlet pipe to the cold water supply pipe of the open boiler at a level above the connection of the lower end of the vertically arranged portion of the dispensing pipe to the open boiler, and into which open water tank the pipe feeds cold water;
— a first sensing member in the cold water supply system for signalling a high water level in the open water tank;
— a second sensing member near the inlet of the cold water supply pipe of the open boiler for signalling a low water level in the cold water supply system upstream of said cold water supply pipe;
— a switchable inlet valve in the pipe feeding water to the open water tank;
— a switchable outlet valve in the outlet pipe;
— a control device which controls the switching means for switching the energy supply to the heating element, the inlet valve and the outlet valve dependant on the signals sent by the sensing members, said control device including an adjustment means for the amount of water to be boiled;
— the control device closing the inlet valve and opening the outlet valve when the high water level is signalled, and opening the inlet valve and causing the switching means to interrupt the energy supply when the low water level is signalled.

A similar apparatus is known from NL—A— 6804851. In this known apparatus the said open water tank is used for repeatedly dispensing a batch of water to be heated in the open instantaneous water boilers. Each time the higher water level is signalled the control device causes the energy supply determining means to restore energy supply to the heating element. Thus for heating a batch of cold water being metered by means of the water tank and of the signals from the sensing members, the heating element is switched on and off once. The known device is disadvantageous in that the heating element is switched on and off continuously dependent on the water level in the open water tank. This intermittent operation is a harassing load of the mains and, moreover, exacts high standards of design with regard to the life span of the energy supply determination means.

To eliminate this disadvantage an apparatus according to the invention is characterized in that

— an open buffer vessel is positioned with its bottom at the level of or below the bottom of the open water tank but also at a level above the lower end of the vertically arranged portion of the dispensing pipe and between the outlet valve and the open boiler and
— the setting of the adjustment means sets a number of instances that sequentially the transmission of the signal from the low water level sensing member to the energy supply switching means is suppressed thus leaving the heating element switched on, the low water level corresponding with a substantial depth in the open buffer vessel.

According to the invention the said apparatus is advantageously constructed in such a manner that the open buffer vessel and the open water tank respectively are compartments of one single vessel with one single partition wall reaching to the bottom of the said vessel. Thus it is possible without any extension of the space occupied compared with the known apparatus to cause the required amount of cold water for preparing a hot drink to pass in a continuous flow through the instantaneous boiler ensuring optimal use of the boiler.

The invention will hereafter be elucidated with a description of two embodiments.

Fig. 1 shows a schematical illustration of an apparatus according to the invention.

Fig. 2 shows a schematical illustration of an advantageous embodiment of the apparatus shown in fig. 1.

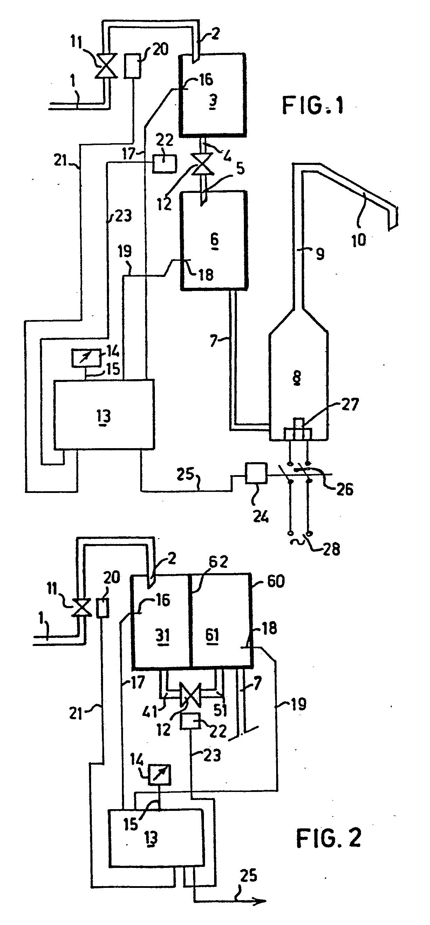

In fig. 1 a supply pipe 1 is feeding through nozzle 2 cold water to an open water tank 3. In the bottom of the water tank 3 a discharge pipe 4 with a nozzle 5 is mounted, through which discharge pipe water can flow from the water tank to an open buffer vessel 6, in the bottom of which a cold water supply pipe 7 is connected which extends below in the side of an open boiler 8. On top of the boiler 8 there is a dispensing pipe comprising a vertically arranged part 9 and a dispensing nozzle 10. The apparatus for preparing hot drinks further comprises a device for preparing the hot drink wherein via the dispensing pipe the water boiling-over from the boiler is dispensed. This device with accessories is not shown in fig. 1.

In the supply pipe 1 an inlet valve 11 is present and in the discharge pipe 4 an outlet valve 12 is present. The two valves 11 and 12 are electrically controlled by a control device 13. In the water tank 3 a first sensing member 16 is present with which a certain water filling level of the tank via line 17 can be signalled to the control device 13. In the buffer vessel 6 a second sensing member 18 is present for signalling via line 19 a water filling level in the buffer vessel to the control device 13.

The open water tank 3 is positioned fully above the open buffer-vessel 6, the bottom of said vessel being at a level above the lower end of the dispensing pipe part 9 where this is connected with the boiler 8.

The inlet valve 11 is provided with a control means 20 connected via a line 21 with the control device 13. The outlet valve 12 in a similar manner is provided with an electrical control means 22 connected via line 23 with the control device 13.

In the boiler 8 an electrical heating element 27 is present that is connected via an on/off switch 26 to the mains 28. The switch 26 is provided with an electrical control means 24 that is connected via line 25 to the control device 13.

The apparatus is operated as follows:

The amount of boiling water to be delivered by the boiler 8, is adjusted beforehand by means of an adjustment means 14 connected with the control device via an electrical line 15. This amount is determined in the example described here by the contents of the water tank 3 up to the first sensing member 16, said constants functioning as a unit batch.

In starting the apparatus the water level in the buffer vessel 6 generally corresponds with the first sensing member 18. The control device 13 will switch-on the heating element through the switch 26 no sooner than that the water level in the water tank 3 has appeared to correspond with the first sensing member 16. The heating element 27 in the boiler 8 continues to be switched-on via the switch 26 until the moment whereupon the number of cycles for filling the water tank 3 and its emptying adjusted by the adjustment means 14 is performed.

In fig. 2 another embodiment of the apparatus shown in fig. 1 is proposed. The open water tank in this embodiment is a compartment 31 of a vessel 60, said compartment being separated from the open buffer vessel 61 by a partition wall 62. The compartments 31 and 61 communicate through orifices in the bottom by a discharge pipe consisting of parts 41 and 51, the outlet valve 12 being arranged between said parts 41 and 51. Otherwise this embodiment of an apparatus according to the invention is identical to the embodiment proposed in fig. 1. This is the reason why the boiler 8 with the dispensing pipe 9, 10 is not shown in fig. 2. The position of the vessel 60 is similar to that of the buffer vessel 6 in fig. 1, that is to say that the bottom is at a level above the lower end of the dispensing pipe part 9 where this is connected with the boiler 8. The unit of volume with which the batch of boiling water for preparing a hot drink is dispensed, is determined in this embodiment by the height difference between the sensing members 16 and 18.

In the embodiment according to fig. 2 the first sensing member 16 is mounted in the water tank 31 resulting in that fluctuations of the water surface in the buffer vessel 61 which develop because of the open connection via the cold water pipe 7 with the boiler 8, and which due to the presence of the cold water pipe 7, are already a slight reproduction of fluctuations of the water level in the dispensing pipe part 9, are still further damped, which adds to the accuracy of measuring the cold water fed to the water tank 31.

In the first embodiment according to fig. 1 the water tank 3 is mounted entirely free of the buffer vessel 6 and fluctuations of the water level around the second sensing member 18 do not play a role.

## Claims

1. An apparatus for preparing hot drinks comprising:

— an open boiler (8) having a cold water supply pipe (7) and a dispensing pipe (9, 10) with a vertically arranged portion (9);

— a heating element (27) in the boiler (8) with a switching means (26) switching the energy supply to the heating element;

— a device for receiving hot water from the dispensing pipe (9, 10) and preparing said hot drinks;

— a cold water supply system containing a pipe (1, 2 and an open water tank (3, 31) whose bottom is connected by an outlet pipe (4) to the cold water supply pipe (7) of the open boiler (8) at a level above the connection of the lower end of the vertically arranged portion (9) of the dispensing pipe (9,10) to the open boiler, and into which open water tank the pipe feeds cold water;

— a first sensing member (16) in the cold water supply system for signalling a high water level in the open water tank (3, 31);

— a second sensing member (18) near the inlet of the cold water supply pipe (7) of the open boiler (8) for signalling a low water level in the cold water supply system upstream of said cold water supply pipe;

— a switchacble inlet valve (11) in the pipe (1, 2) feeding water to the open water tank (3, 31);

— a switchable outlet valve (12) in the outlet pipe (4);

— a control device (13) which controls the switching means (26) for switching the energy supply to the heating element (27), the inlet valve (11) and the outlet valve (12) dependent on the signals sent by the sensing members (16, 18), said control device including an adjustment means (14) for the amount of water to be boiled;

— the control device (13) closing the inlet valve (11) and opening the outlet valve (12) when the high water level is signalled, and opening the inlet valve (11) and causing the switching means (26) to interrupt the energy supply when the low water level is signalled,

characterised in that

— an open buffer vessel (6, 61) is positioned with its bottom at the level of or below the bottom of the open water tank (3, 31) but also at a level above the lower end of the vertically arranged portion (9) of the dispensing pipe (9, 10) and between the outlet valve (12) and the open boiler (8) and
— the setting of the adjustment means (14) sets a number of instances that sequentially the transmission of the signal from the low water level sensing member (18) to the energy supply switching means (26) is suppressed thus leaving the heating element (27) switched on, the low water level corresponding with a substantial depth in the open buffer vessel (6, 61).

2. Apparatus according to claim 1, characterised in that the buffer vessel (61) and the open water tank (31) respectively are compartments of one single vessel (60) with one single partition wall (62) reaching to the bottom of the said vessel.

3. Apparatus according to claim 2, characterised in that the second sensing member (18) is mounted in the open buffer vessel (61).

**Revendications**

1. Un appareil pour la préparation de boissons chauds, comprenant:

— une chaudière ouverte (8) pourvue d'un tuyau d'amenée d'eau fraîche (7) et d'un tuyau de distribution (9, 10) ayant une section verticale (9);
— un élément de chauffage (27) dans la chaudière (8) comportant un organe interrupteur (26) pour régler l'amenée d'énergie vers l'élément de chauffage;
— un dispositif pour recevoir de l'eau chaude venant du tuyau de distribution (9, 10) et pour préparer lesdits boissons chauds;
— un système d'amenée d'eau fraîche comprenant un tuyau (1, 2) et un réservoir d'eau ouvert (3, 31) dont le fond est connecté, par un tuyau de sortie (4), au tuyau d'amenée d'eau fraîche (7) de la chaudière (8) et cela à un niveau au-dessus de l'endroit où l'extrémité inférieure de la section verticale (9) du tuyau de distribution (9, 10) est connétée à la chaudière ouverte, le tuyau versant de l'eau fraîche dans le réservoir d'eau ouvert;
— un premier membre sensitif (16) dans le système d'amenée d'eau fraîche pour signaler un niveau d'eau élevé dans le réservoir d'eau ouvert (3, 31);

— un second membre sensitif (18) près de l'entrée du tuyau d'amenée d'eau fraîche (7) de la chaudière ouverte (8) pour signaler un niveau d'eau bas dans le système d'amenée d'eau fraîche en amont dudit tuyau d'amenée d'eau fraîche;
— une soupape réglable d'entrée (11) dans le tuyau (1, 2) versant de l'eau dans le réservoir d'eau ouvert (3, 31);
— une soupape réglable de sortie (12) dans le tuyau de sortie (4);
— un dispositif de réglage (13) qui règle l'organe interrompu (26) pour régler l'amenée d'énergie vers l'élément de chauffage (27), la soupape d'entrée (11) et la soupape de sortie (12) étant en fonction des signaux émis par les membres sensitifs (16, 18), et ledit dispositif de réglage étant muni d'un moyen d'ajustage (14) pour la quantité d'eau à faire bouillir;
— le dispositif de réglage (13) fermant la soupape d'entrée (11) et ouvrant la soupape de sortie (12) lorsque le niveau d'eau élevé est signalé, et ouvrant la soupape d'entrée (11) et faisant l'organe interrupteur (26) interrompre l'amenée d'énergie lorsque le niveau d'eau bas est signalé;

caractérisé en ce que

— un vase tampon ouvert (6, 61) est positionné de façon que son fond soit au niveau ou au-dessous du fond du réservoir d'eau ouvert (3, 31) mais aussi à un niveau au-dessus de l'extrémité inférieure de la section verticale (9) du tuyau de distribution (9, 10) et entre la soupape de sortie (12) et la chaudière ouverte (8) et
— la commande du moyen d'ajustage (14) détermine un certain nombre de fois qu'est supprimée séquentiellement la transmission und signal venant du membre sensitif (18) au niveau d'eau bas et passant à l'organe interrupteur de l'amenée d'énergie (26), et maintenant ainsi l'élément de chauffage (27) connecté, le niveau d'eau bas correspondant à une profondeur substantielle dans le vase tampon ouvert (6, 61).

2. Appareil selon la revendication 1, caractérisé en ce que le vase tampon (61), respectivement le réservoir d'eau ouvert (31), sont des compartiments d'un seul vase (60) ayant une seule paroi séparatrice (62) qui s'étend jusqu'au fond dudit vase.

3. Appareil selon la revendication 2, caractérisé en ce que le seond membre sensitif (18) est disposé dans le vase tampon ouvert (61).

**Patentansprüche**

1. Anlage zur Zubereitung heisser Getränke, umfassend:

— einen offenen Kessel (8) mit einem Frischwasserzuleitungsrohr (7) und einem Ausschenkrohr (9, 10) mit einem vertikal ausgeführten Teil (9);

— ein Heizelement (27) in dem Kessel (8) mit einem Schaltungsglied (26) zur Schaltung der Energiezufuhr zu dem Heizelement;

— eine Vorrichtung zur Aufspeicherung von heissem Wasser aus dem Ausschenkrohr (9, 10) und zur Herstellung der genannten heissen Getränke;

— ein Frischwasserzuleitungssystem das ein Rohr (12) und einen offenen Wasserbehälter (3, 31), dessen Boden durch ein Abflussrohr (4) am Frischwasserzuleitungsrohr (7) des offenen Kessels (8) in einer Höhe über die Verbindung des niederen Endes des vertikal ausgeführten Teils (9) des Ausschenkrohres (9, 10) zu dem offenen Kessel, verbunden ist, enthält, und in welchen offenen Wasserbehälter das Rohr frisches Wasser zuführt;

— ein erstes Abtastglied (16) im Frischwasserzuleitungssystem zur Signalierung eines Hochwasserstandes im offenen Wasserbehälter (3, 31);

— ein zweites Abtastglied (18) in der Nähe des Frischwasserzuleitungsrohres (7) des offenen Kessels (8) zur Signalierung eines Niedrigwasserstandes im Frischwasserzuleitungssystem stromaufwärts des genannten Frischwasserzuleitungsrohrs;

— ein steuerbares Einlassventil (11) im Rohr (1, 2) das Wasser zum offenen Wasserbehälter (3, 31) zuführt;

— ein steuerbares Abflussventil (12) im Abflussrohr (4);

— eine Steuervorrichtung (13) die das Schaltungsglied (26) zur Schaltung der Energiezufuhr zum Heizelement (27), das Einlassventil (1) und das Abflussventil (12) in Abhängigkeit der Signale die durch die Abtastglieder (16, 18) gesendet worden sind, steuert, welche Steuervorrichtung ein Einstellglied (14) für die Wassermenge, die gekocht werden soll, umfasst;

— wobei die Steuervorrichtung (13) das Einlassventil (11) schliesst und das Abflussventil (12) öffnet wenn der Hochwasserstand signalisiert wird, und das Einlassventil (11) öffnet und die Unterbrechung der Energiezufuhr veranlässt wenn der Niedrigwasserstand signalisiert wird,

dadurch gekennzeichnet, dass

— ein offener Pufferbehälter (6, 61) der mit seinem Bodem in der Höhe des Bodens oder darunter des offenen Wasserbehälters (3, 31), aber auch in einer Höhe über dem niederen Ende des vertikal ausgeführten Teiles (9) des Ausschenkrohres (9, 10) und zwischen dem Abflussventil (12) und dem offenen Kessel (8) liegt, und

— das Einstellen des Einstellgliedes (14) eine Zahl Male festsetzt dass nacheinander die Übertragung des Signals vom Niedrigwasserstandabtastglied (18) auf das Energiezufuhrschaltungsglied (26) unterdrückt wird, wodurch des Heizelement (27) eingeschaltet bleibt, wobei der Niedrigwasserstand einem erheblichen Tiefe im offenen Pufferbehälter (6, 61) entspricht.

2. Anlage nach Anspruch 1, dadurch gekennzeichnet, dass der Pufferbehälter (61), bzw. der offenen Wasserbehälter (31) Abteilungen eines einzigen Behälters (60) sind, der mit einer einzigen Trennungswandteil (62) die sich bis auf den Boden des genannten Behälters erstreckt, ausgestattet ist.

3. Anlage nach Anspruch 2, dadurch gekennzeichnet, dass das zweite Abtastglied (18) im offenen Pufferbehälter (61) angeordnet ist.

FIG.1

FIG. 2